Europäisches Patentamt

European Patent Office

Office européen des brevets

(11) Publication number: **0 343 629**
**A1**

## (12) EUROPEAN PATENT APPLICATION

(21) Application number: 89109386.6

(22) Date of filing: 24.05.89

(51) Int. Cl.⁴: **B65D 75/58** , **B29C 65/02** , **B29C 65/76**

(30) Priority: 27.05.88 DE 3818111

(43) Date of publication of application:
29.11.89 Bulletin 89/48

(84) Designated Contracting States:
AT BE CH DE ES FR GB GR IT LI LU NL SE

(71) Applicant: HAG GF AKTIENGESELLSCHAFT
Hagstrasse 3
D-2800 Bremen 1(DE)

(72) Inventor: Schellhaass, Karl
Akazienstrasse 40
D-2800 Bremen(DE)

(74) Representative: Füchsle, Klaus, Dipl.-Ing. et al
Hoffmann . Eitle & Partner Patentanwälte
Arabellastrasse 4
D-8000 München 81(DE)

(54) Packaging with an easily separating seam.

(57) The invention relates to a packaging which consists at least in the region of an opening (12) of two foil layers, which have on their surfaces lying against each other a sealable and peelable coating. To tightly seal the opening (12), the foil layers are joined with one another by means of a heat-sealed seam (14) running essentially transversally to the opening direction (16). For the formation of flaps (18) which enable manual opening of the sealed seams (14), this sealed seam (14) is produced in such a way that it lies at a distance from the free opening edges (20) of the foil layers. For easy separating of the sealed seam (14) by pulling apart the flaps (18) in the opening direction (16), the sealed seam (14) runs from at least one section (22) lying nearer the opening edges (20) away to both sides at an angle to the opening edges (20). The sealed seam (14) can consist of various concrete forms; for example, it can be formed solely V-shaped or sectionwise V-shaped or also have the form of a curve, or comprise several curve-shaped sections.

Fig.1

## PACKAGING WITH AN EASILY SEPARATING SEAM

The invention relates to a packaging that consists at least in the region of an opening of two foil layers, which have on their surfaces lying against each other a sealable and peelable PE-coating, which, to seal the opening by means of a heat-sealed seam running essentially transversely to the opening direction, are joined with one another in such a way, that for the formation of flaps which enable manual opening of the sealed seam, this sealed seam lies at a distance from the free opening edges of the foil layers.

Such packaging, which particularly serves as vacuum-packaging or gas flushed packaging for coffee, tea or the like, consists either on the whole of peel-foil or has at least in the region of the opening a peel-foil inlay. These are closed at the top end, that is to say in the region of their opening, by heat-sealed seam which runs linearly and transversely to the opening direction. So that this heat-sealed seam seals the opening both tight and fast, it must show great adherence. A relatively wide sealed seam is therefore applied and by appropriate selection of the sealing apparatus and temperature, regard is shown for a high qualitiy fusion of sealing of the synthetic material. From this, the disadvantage ensues that packaging with a conventionally developed sealed seam can only be opened with considerable expenditure of energy or even only by cutting the foil material with a knife, scissors or the like.

Accordingly, it is the object of the invention to create a packaging, which, with retention of its fasteness against mechanical loading and its tightness, can be opened easily by hand, that is to say, without the use of supplementary means and withouth distruction of the foil material.

This object is solved according to the invention in that for easy separating of the seam by pulling apart the flaps in the opening direction, this sealed seam runs from at least one section lying nearer the opening edges away to both sides at an angle to the opening edges.

If, to open it, the packaging according to the invention is taken hold of at its opening edges and these are pulled apart with a light application of force, this opening force acts solely on the section of the sealed seam lying nearer the opening edges; this opening force is sufficient to overcome the adhesive strength of this short section of the sealed seam and with that to loosen the sealed seam in this section. With similarly light application of force, the subsequent sections of the sealed seam are consecutively separated because always gradually only a certain short section of the sealed seam is torn open.

In contrast to this, with the familiar packagings the applied opening force acts essentially on the whole length of the transversely to the opening direction and linearly running sealed seam, with the result that per unit of length only a small opening force comes into effect, which in many cases was too small to exceed the adhesive limit of the sealed seam and with this to open the sealed seam up.

The effect according to the invention, which consists therein that always only relatively short sections of the sealed seam are opened by the full opening force and because of this, this opening force easily suffices to overcome the adhesive strength of the sealed seam and therefore to open it, can be achieved with various forms of the sealed seam. For example, this can be designed as being solely V-shaped or sectionally V-shaped; but it can also have the form of a curve or be composed of several curve-shaped sections. The sealed seam always runs essentially transversely to the opening direction, that is to say at right angles to the longitudinal edges if the packaging; but it consists of shorter sections which run with their relatively flat angle away from the free ends of the opening edges.

It is of particular advantage, if, in the region of at least one opening edge, a marking is provided which is orientated towards a section of sealed seam lying closest to the open edge. With this marking, an indication which cannot be failed to be noticed is given to the user as to where the opening edges are to be taken hold off; in this way, the opening force is optimally directed towards the section of the sealed seam lying closest to the opening edges so that here the full opening force is available, which easily overcomes the adhesive strength of the sealed seam and because of this, the sealed seam enables itself to be opened easily. This marking can be formed by an imprint, by inking, by an impression, with a stick-on label or the like. Only one opening edge may be provided with such a marking; but also both opening edges can of course also be marked.

The form of the heat-sealed seam according to the invention is applicable to various packaging types found on the market. The actual peel-foil packaging can thus be enclosed in a further paper or carton wrapper. If it is used for gasing products, it can have a valve. Any manner in which the opening edges are to be folded can be chosen. Due to the fact that the heat-sealed seam according to the invention can be opened without destruction of the material, there results the advantage of an easy and tight closing of the packaging.

From the European patent application, publication no. 0 030 148, a process for manufacturing tubular packing, an appliance for the carrying-out of this method, as well as a packaging manufactured according to this process is known. The fundamentals of this process consist therein, that for the manufacture of a packaging from a tubing of sealable material, by simultaneously cutting at a head and a base, a section is cut from the tubing, and for the closing up of this section at the same time as the cutting, a head seam and a base seam are produced by a process to seal the material. To attain sealed seams with higher fasteness despite longitudinal seams or folds folded back with side-gussets, the pressing of two foil layers ensues with simultaneous heating of the material through application of a gradual, in the transverse direction of the tubing, progressive pressing force, in contrast to known processes, in which the pressing force is supplied simultaneously transversely along the whole lenght of the sealed seam. The apparatus used for this includes two rotating clamping jaws on whose casing the embossing surfaces progress helically-shaped in at least one section. On the basis of this process and the revealed apparatus, sealed seams result which run at least in one section at an angle to the opening edges; inter alia a V-shaped sealed seam can also be produced.

However, the document gives neither expressis verbis nor in its entire disclosure content any indication that the revealed sealed seams forms could bring about an easier opening of the packaging. Rather, with the known packaging the opening edges are particularly cut with a serrated knife in a zigzag-form; with this zigzag-form it is meant to make it easier for the user to tear into the material in the opening direction and with this to break open the sealed seam. The packing can therefore not longer to be closed. With the required tearing of the packaging material, it is not been thought of with the known packaging to make use of a peelable foil, as is the case according to the invention.

By way of example in Figs. 1 to 5, the invention is shown in five embodiment forms, in which:

Fig. 1 shows a perspective view of a packaging according to the invention, and

Figs. 2 to 5 each show front of views of various forms of the sealed seam.

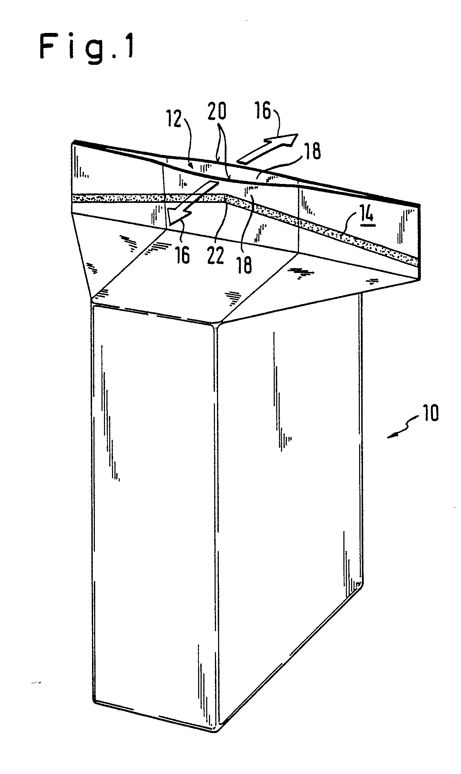

As shown in Fig. 1, the packaging 10 has in its upper region an opening 12 which is formed between two foil layers. At least in the region of this opening 12, the foil layers are coated on their surfaces lying against each other with polyethylene so that these are sealable and peelable. To seal the opening 12 tight the foil layers are joined with oneanother by means of a heat-sealed seam 14. The seal seam 14 runs essentially transversely to the opening direction, where this opening direction is shown with the arrows 16. For the formation of flaps 18, which enable manual opening of the sealed seams, the sealed seam 14 lies at a distance from the free opening edges 20 of the foil layers.

For easy separating of the sealed seam 14 by pulling apart the flaps 18 in the opening direction, as recognisable from Fig. 1, the sealed seam 14 lies with the section 22 nearer to the opening edges 20 than in the rest of its progression; from this section 22 it progresses accordingly to both sides of the packaging 10 at an angle away from the opening edges 20.

Therefore, to open the packaging 10 according to the invention only a light force needs to be applied. Since the opening force firstly acts solely on the section 22 of the sealed seam 14 lying nearer to the opening edges 20, it is sufficient to overcome the adhesive strength of this short section 22 and thereby to separate the sealed seam 14. With further application of this light opening force the subsequent section of the sealed seam 14 is then consecutively separated.

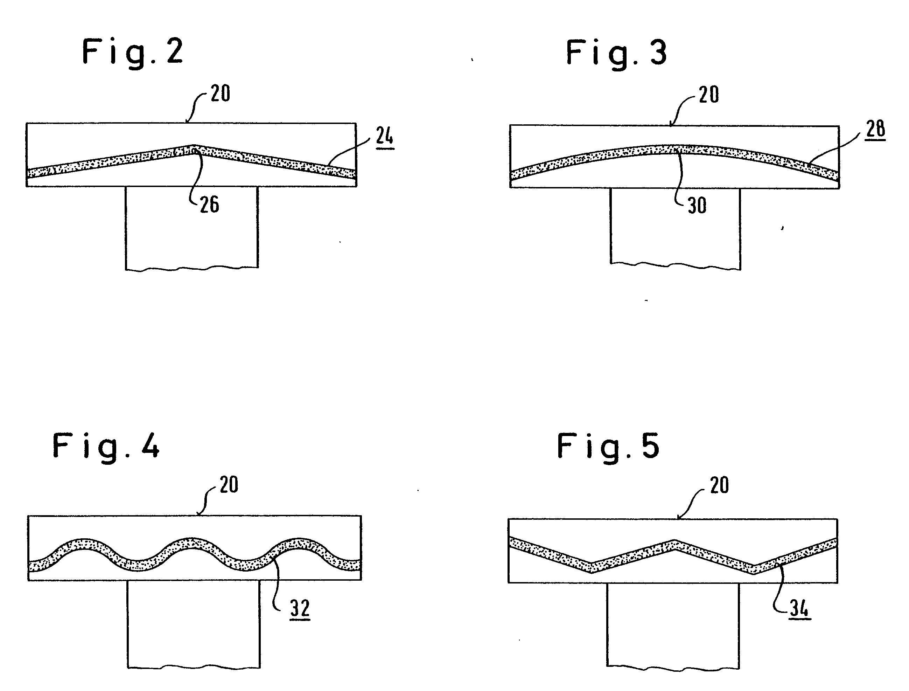

In Fig. 2 a front view of the symmetrically re-shaped sealed seam 24 is shown. It is clearly to be recognized that the point 26 of the V 24 lies nearer to the opening edges 20.

Fig. 3 shows in a further form of embodiment of the packaging according to the invention a symmetrically curved-shaped sealed seam 28, where the apex 30 of the curve 28 lies nearer to the opening edges 20.

Furthermore, in Fig. 4 a sealed seam 32 is shown, which consists of several curved-shaped sections. In correspondence with Fig. 3, the apex of the curves lie nearer to the opening edges 20.

Fig. 5 shows a further form of the V-shaped sealed seam 24 according to Fig. 2. Here the form of the sealed seam 34 comprises several V-shaped sections, where each V lies with its point nearer to the opening edges 20.

## Claims

1. Packaging,
- that consists at least in the region of an opening (12) of two foil layers,
- which have on their surfaces lying against each other a sealable and peelable PE-coating,
- which, to seal the opening (12) by means of a heat-sealed (14, 24, 28, 32, 34) running essentially transversely to the opening direction (16) are joined with one another in such a way,
- that for the formation of flaps (18) which enable manual opening of the sealed seams (14, 24, 28, 32, 34), this sealed seam (14, 24, 28, 32, 34) lies at a distance from the free-opening edges (20) of the foil layers.

characterized in that,

- for easy separating of the sealed seam (14, 24, 28, 32, 34) by pulling apart the flaps (18) in the opening direction (16), this sealed seam (14, 24, 28, 32, 34) runs from at least one section (22, 26, 30) lying nearer the opening edges (20) away to both sides at an angle to the opening edges (20).

2. Packaging according to claim 1, characterized in that the sealed seam (24) on the whole runs symmetrically V-shaped, in which the point (26) of the V (24) lies nearer to the opening edges (20) at one point.

3. Packaging according to claim 2, characterized in that the form of the sealed seam (34) consists of several V-shaped sections.

4. Packaging according to claim 3, characterized in that the sealed seam (28) runs symmetrically curve-shaped and the apex (30) of the curve (28) lies nearer to the opening edges (20).

5. Packaging according to claim 4, characterized in that the form of the sealed seam (32) consists of several curve-shaped sections.

6. Packaging according to claim 5, characterized in that in the region of at least one of the opening edges (20) a marking is provided which is orientated towards the section (22, 26, 30) of the sealed seam (14, 24, 28, 32, 34) lying closest to the opening edge (20).

7. Packaging according to claim 6, characterized in that it is designed as a vacuum-packaging or a gas flushed packaging.

# Fig.1

Fig. 2

Fig. 3

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 620 354 (SALFISBERG) <br> * Page 2, lines 45-107; page 3, lines 8-18; figures 1-6; * | 1,2,4,7 | B 65 D 75/58 <br> B 29 C 65/02 <br> B 29 C 65/76 |
| Y | * Page 3, lines 40-55 * | 5 | |
| X | DE-A-3 508 445 (PAULY) <br> * Claim, "specification" * | 1,2 | |
| X | US-A-3 217 871 (LEE) <br> * Column 2, lines 20-29; column 3, lines 4-31; column 6, lines 13-21; figures 1-10 * | 1,2 | |
| X | EP-A-0 089 659 (GARDNER) <br> * Page 4, lines 7-27; figure 1 * | 1,2,6 | |
| X | US-A-3 510 054 (SANNI) <br> * Column 2, line 70 - column 3, line 8; figures 6-7 * | 1-3 | |
| Y | FR-A-1 358 645 (PIRELLIPLAST) <br> * Abstract, points 1,2; figures 1-3 * | 5 | **TECHNICAL FIELDS SEARCHED (Int. Cl.4)** <br><br> B 65 D <br> B 29 C <br> B 65 B |
| A | DE-A-3 535 957 (RAPP) | | |

The present search report has been drawn up for all claims

| Place of search | Date of completion of the search | Examiner |
|---|---|---|
| THE HAGUE | 30-08-1989 | VANTOMME M.A. |

EPO FORM 1503 03.82 (P0401)